# EUROPÄISCHE PATENTSCHRIFT

(11) **EP 4 256 963 B1**
(45) Veröffentlichungstag und Bekanntmachung des Hinweises auf die Patenterteilung: **19.02.2025**
(21) Anmeldenummer: 23188371.1
(22) Anmeldetag: 26.04.2016
(51) Int. Cl.: A22C 25/04, A22C 25/08, A22C 25/12

(54) **FISCHZUFÜHREINRICHTUNG UND VERFAHREN HIERZU**
FISH CONVEYING APPARATUS AND METHOD
DISPOSITIF ET METHODE DE TRANSPORT POUR DES POISSONS

(43) Veröffentlichungstag der Anmeldung: 11.10.2023
(62) Teilanmeldung aus: 16720089.8
(73) Patentinhaber: NORDISCHER MASCHINENBAU RUD. BAADER GMBH + CO KG, 23560 Lübeck (DE)
(72) Erfinder: HERBST, Jan-Patrick, 23795 Groß Rönnau (DE); SCHUBERT, Frank, 22359 Hamburg (DE); JACOBSEN, Ulf, 23611 Bad Schwartau (DE); LOHSE, Christian, 23558 Lübeck (DE); DALGAARD-NIELSEN, Ib Verner, 8362 Hoerning (DK)
(74) Vertreter: Stork Bamberger Patentanwälte PartmbB

(56) Entgegenhaltungen:
- WO-A1-03/013262
- WO-A1-2016/020105
- IBTRADE FOODMACHINES: "Big Marel Grader/Batcher for sale 8 stations for Whole cod, Haddock, pollack", 15 December 2012 (2012-12-15), XP054975671, Retrieved from the Internet <URL:https://www.youtube.com/watch?v=VC2x00P2W9s&feature=youtu.be> [retrieved on 20150114]
- MAREL FISH: "Customer Story - Bremnes Seashore", 18 February 2013 (2013-02-18), XP054977008, Retrieved from the Internet <URL:https://www.youtube.com/watch?v=UEkA0uUYp4E> [retrieved on 20161207]

## Beschreibung

Die vorliegende Erfindung betrifft eine Fischzuführeinrichtung, eingerichtet und ausgebildet zum Zuführen von Fischen an mehrere Fischbearbeitungseinrichtungen, wobei diese einen zum Fördern der Fische quer zu ihrer Kopf-Schwanz-Ausrichtung in Querförderrichtung eingerichteten Querförderer umfasst, wobei der Querförderer eine Vielzahl von jeweils zur Einzelaufnahme eines der Fische ausgebildeten Aufnahmeelementen aufweist, der Querförderer zudem eine steuerbar eingerichtete Antriebseinheit umfasst, und die Fischzuführungseinrichtung weiter mindestens eine zum Beschicken der Aufnahmeelemente des Querförderers mit den Fischen eingerichtete Beschickungseinrichtung aufweist und mehrere Übergabeeinrichtungen umfasst, die zur selektiven Übergabe der Fische von dem Querförderer an jeweils den Fischbearbeitungseinrichtungen vorgeordnete Längsförderer ausgebildet sind, wobei die Längsförderer eingerichtet sind, die Fische längs ihrer Kopf-Schwanz-Ausrichtung zu den Fischbearbeitungsmaschinen zu fördern, sowie eine Steuereinrichtung, die eingerichtet ist, die mindestens eine Beschickungseinrichtung, die Übergabeeinrichtungen sowie die Fördergeschwindigkeit des Querförderers auf Basis mindestens einer vorbestimmten Verteilvorschrift zu steuern.

Des Weiteren betrifft die Erfindung ein Verfahren zum Zuführen von Fischen an mehrere Fischbearbeitungsmaschinen, umfassend die Schritte: Fördern der Fische quer zu ihrer Kopf-Schwanz-Ausrichtung in Querförderrichtung mittels einer Vielzahl von jeweils zur Einzelaufnahme eines der Fische ausgebildeten Aufnahmeelementen eines Querförderers, Beschicken der Aufnahmeelemente des Querförderers mittels einer Beschickungseinrichtung, selektives Übergeben der Fische von dem Querförderer an jeweils den Fischbearbeitungsmaschinen vorgeordnete Längsförderer mittels Übergabeeinrichtungen, Fördern der übergebenen Fischen längs ihrer Kopf-Schwanz-Ausrichtung zu den Fischbearbeitungsmaschinen mittels der Längsförderer, Steuern des Beschickens der Aufnahmeelemente sowie des selektiven Übergebens der Fische auf Basis mindestens einer vorbestimmten Verteilvorschrift.

Derartige Anordnungen und Verfahren kommen in der Fisch verarbeitenden Industrie zum Einsatz. Insbesondere bei der automatischen Verarbeitung von Fischen ist es erforderlich, die Fische den jeweiligen Fischbearbeitungseinrichtungen automatisch zuzuführen.

Aus dem Dokument WO 03/013262 ist beispielsweise ein Verfahren zur automatisierten Verarbeitung von Fischen und eine Anlage zum Aufbereiten und Verarbeiten von Fischen bekannt. Die Fische werden den Bearbeitungsmaschinen, beispielsweise Maschinen zum automatisierten Entweiden, über entsprechende Zuführeinrichtungen automatisch gesteuert zugeführt. Als Zuführeinrichtung kommt ein Zuführband zum Einsatz, auf dem die Fische in Fischlängsrichtung gefördert werden. Mittels steuerbarerer Abweiser werden die Fische den jeweiligen Verarbeitungsmaschinen zugeführt, indem die Fische vom Abweiser von dem Förderband jeweils auf eine Rutsche geschoben werden, die zu den jeweiligen Verarbeitungsmaschinen führt.

Dokument WO 2016 / 020105 A1 offenbart eine Förder- und Verteilvorrichtung für geschlachtete Fische. Die Fische werden von Schaltmaschinen mittels nachgeordneter Längsförderer jeweils zu einer Wägeeinrichtung zum Erfassen des Gewichts der geschlachteten Fische gefördert. An jedem der Längsförderer ist zumindest eine erste Übergabeeinrichtung angeordnet, die zum Übergeben der geschlachteten Fische an mindestens einen Querförderer ausgebildet und eingerichtet ist. Am Ende des Querförderers ist eine Zuführeinrichtung angeordnet, die zum Abnehmen der geschlachteten Fische von dem Querförderer und zum Zuführen derselben an eine Verteileinrichtung ausgebildet und eingerichtet ist. Mittels Positionsverfolgungsmitteln wird die Position der geschlachteten Fische nachverfolgt und durch Zuordnungsmittel die erfassten Gewichte der jeweiligen Position der Fische zugeordnet. Auf Basis der erfassten Gewichte wird die Verteileinrichtung beim Eintreffen der geschlachteten Fische gemäß einer vorbestimmten Verteilvorschrift gesteuert.

Die bekannten Vorrichtungen und Verfahren zum Zuführen von Fisch weisen eine Reihe von Nachteilen auf. Zum einen ist bei der aus dem Stand der Technik bekannten Förderung der Fische in Längsausrichtung, also Kopf bzw. Schwanz voraus, die Anzahl der maximal pro Zeiteinheit fördererbaren Fische nach oben begrenzt. Die Förderung der Fische in Längsrichtung erfolgt in der Regel mittels Förderbändern, auf denen die Fische liegend transportiert werden. Um ein unkontrolliertes Rutschen der Fische beim Beschicken derartiger Förderbänder zu vermeiden, gibt es eine obere Schranke für die maximale Fördergeschwindigkeit. Ein weiterer Nachteil besteht darin, dass jeder der Fische auf dem Förderband in Förderrichtung einen Abschnitt belegt, der mindestens seiner Körperlänge entspricht, so dass auch hierdurch die maximale Fördergeschwindigkeit begrenzt ist.

Ein weiterer Nachteil besteht darin, dass bei den heute gewünschten hohen Durchsatzleistungen an Fischen pro Zeiteinheit, es für Hilfskräfte nicht mehr darstellbar ist, die Fische manuell auf ein solches Förderband zu legen, um die gewünschten Fördergeschwindigkeiten überhaupt erreichen zu können.

Des Weiteren besteht der Bedarf, die Fische möglichst an einem zentralen Ort der Anlage zur weiteren Fischverarbeitung zuzuführen und diese dann mit hoher Durchsatzleistung möglichst an mehrere der Fischbearbeitungseinrichtungen automatisch zu verteilen.

Es ist daher Aufgabe der vorliegenden Erfindung, eine Fischzuführvorrichtung vorzuschlagen, die eine optimale Zuführung der Fische an mehrere Bearbeitungseinrichtungen bei zugleich möglichst hohen Fördergeschwindigkeiten gewährleistet. Des Weiteren besteht die Aufgabe darin, ein entsprechendes Verfahren vorzuschlagen.

Die Aufgabe wird durch die eingangs genannte Fischzuführeinrichtung gelöst, indem die mindestens eine Beschickungseinrichtung wenigstens ein steuerbewegliches Eintaktklappenelement umfasst, das eingerichtet ist, mittels eines von der Steuereinrichtung erzeugten Eintaktsteuersignals jeweils das Beschicken eines der Aufnahmeelemente mit Fisch zu einem vorgewählten Abgabezeitpunkt zu steuern, wobei die Beschickungseinrichtung ein steuerbewegliches Speicherklappenelement umfasst, und wobei das Speicherklappenelement unter Bildung einer Klappenkaskade dem Eintaktklappenelement vorgeordnet ist.

Auf diese Weise ist es möglich, die Fische mit hohen Fördergeschwindigkeiten an mehrere der Fischbearbeitungseinrichtungen optimal zu verteilen. Auf der einen Seite bietet der Querförderer den Vorteil, dass die Fische dicht gepackt und damit eine große Anzahl der Fische pro Längenabschnitt gefördert werden. Andererseits erlaubt die Querförderung entsprechend hohe Fördergeschwindigkeiten, da die Fische in Einzelaufnahme mittels der Aufnahmeelemente sicher zentriert gehalten werden und zugleich der Platzbedarf in Förderrichtung im Wesentlichen auf die Breite der Fische beschränkt ist.

Ein weiterer Vorteil besteht darin, dass die Beschickung der Aufnahmeelemente mit den Fischen mittels der Beschickungseinrichtungen im Wesentlichen automatisiert eingerichtet ist. Die Beschickungseinrichtungen sind also zum exakten automatischen Beschicken der Aufnahmeelemente eingerichtet und ausgebildet, so dass auch bei hohen Fördergeschwindigkeiten des Querförderers ein präzises Beschicken der Aufnahmeelemente jederzeit gewährleistet ist.

Aufgrund der Steuerung der mindestens einen Beschickungseinrichtung, der Übergabeeinrichtung sowie der Fördergeschwindigkeit des Querförderers mittels der dazu eingerichteten Steuereinrichtung erfolgt die Zuführung der Fische an die weiteren Fischbearbeitungseinrichtungen in jeder Hinsicht optimiert. Mittels der vorbestimmten Verteilvorschrift wird die Gesamtförderleistung des Querförderers anhand der zur Verfügung stehenden Abnahmeleistungen der jeweiligen Fischbearbeitungseinrichtungen vorgegeben. Im Falle eines Ausfalls einer der Fischbearbeitungseinrichtungen oder einer Minderleistung derselben, wird mittels der Steuereinrichtung auf Basis der vorbestimmten Verteilvorschrift die jeweilige der Übergabeeinrichtungen veranlasst, entsprechend weniger der Fische auf den jeweiligen der Längsförderer zu überführen. Die jeweils nicht an die ausgefallene der Fischbearbeitungsmaschinen abgegebenen Fische werden - sofern noch Abnahmekapazitäten seitens der weiteren der Fischbearbeitungseinrichtungen vorhanden sind - an die jeweils anderen der Längsförderer mittels der Übergabeeinrichtungen übergeben und/oder die Fördergeschwindigkeit des Querförderers entsprechend reduziert.

Besonders vorteilhaft ist, dass mittels der erfindungsgemäßen Fischzuführeinrichtung sowie mittels des erfindungsgemäßen Verfahrens, die Gesamtanlagen bestehend aus Fischzuführeinrichtung und Fischbearbeitungseinrichtungen hinsichtlich ihrer räumlichen Anordnung eine hohe Flexibilität aufweist. So können die Abstände zwischen den einzelnen der Fischbearbeitungseinrichtungen auch nicht äquidistant eingerichtet sein, da die Übergabe der Fische mittels der vorbestimmten Verteilvorschrift, an diese Vorgaben anpassbar eingerichtet ist.

Erfindungsgemäß umfasst die mindestens eine Beschickungseinrichtung wenigstens ein steuerbewegliches Eintaktklappenelement, das eingerichtet ist, mittels eines von der Steuereinrichtung erzeugten Eintaktsteuersignals jeweils das Beschicken eines der Aufnahmeelemente mit Fisch zu einem vorgewählten Abgabezeitpunkt zu steuern. Auf diese Weise werden die Fische jeweils taktgenau in das jeweils das Eintaktklappenelement passierende Aufnahmeelement überführt. Aufgrund der zur Steuerung des Eintaktklappenelements ausgebildeten und eingerichteten Steuereinrichtung ist es möglich, die Aufnahmeelemente präzise und bei entsprechend hohen Fördergeschwindigkeiten des Querförderers zu beschicken.

Ein weiterer Vorteil besteht darin, dass beim Ausfall einer der Fischbearbeitungseinrichtungen im dynamischen Betrieb, das Beschicken desjenigen der Aufnahmeelemente ausgelassen werden kann, aus dem die Fische mittels der entsprechend zugeordneten Übergabeeinrichtung im Normalbetrieb an diese übergeben worden wären. Auf diese Weise kann der Betrieb unterbrechungsfrei auch beim Ausfall einzelner der Fischbearbeitungsmaschinen aufrechterhalten werden bzw. ein Stillstand der Gesamtanlage weitestgehend vermieden werden.

Erfindungsgemäß umfasst die Beschickungseinrichtung ein steuerbewegliches Speicherklappenelement, wobei das Speicherklappenelement unter Bildung einer Klappenkaskade dem Eintaktklappenelement vorgeordnet ist. Anders ausgedrückt sind die Beschickungseinrichtungen jeweils als Stufenkaskade ausgebildet. Auf diese Weise wird einerseits sichergestellt, dass keiner der Fische unkontrolliert, d. h. ohne zwischendurch zur Ruhe zu kommen, die Führungsebene hinuntergleitet, wenn sich sowohl das Eintaktklappenelement als auch das Speicherklappenelement in der Offenstellung befinden. Andererseits bietet dies einen erhöhten Bedienkomfort für die Hilfskraft, die die Fische der Beschickungseinrichtung zuführt. Da sichergestellt ist, dass die Fische mittels der zuvor genannten Klappenkaskade jeweils kurzzeitig angehalten werden, um dann ausgehend aus dieser Ruhelage, also von definierten Anfangsbedingungen ausgehend, in die Aufnahmeelemente überführt werden, hat die Hilfskraft einzig und allein ihr Augenmerk darauf zu legen, jeweils rechtzeitig einen der Fische in einen Bereich vor dem Speicherklappenelement zu legen. Die weitere Beschickung der Aufnahmeelemente erfolgt - wie zuvor beschrieben - automatisch durch die Steuereinrichtung und bedarf keines weiteren Eingriffs der Hilfskraft.

Eine bevorzugte Weiterbildung der Erfindung zeichnet sich dadurch aus, dass die Beschickungseinrichtung eine derart geneigt angeordnete Führungsebene umfasst, dass die Fische aufgrund Schwerkrafteinwirkung selbsttätig in einer Schließstellung des Eintaktklappenelements vor dieser in einem ersten Haltebereich zu liegen kommen und in einer Offenstellung des Eintaktklappenelements sich selbsttätig in das jeweilige der Aufnahmeelemente in Richtung des Querförderers bewegen. So wird gewährleistet, dass die Fische kontrolliert und taktweise in die Aufnahmeelemente überführt werden. Die Fische kommen so in dem Haltebereich zunächst jeweils zur Ruhe. Aus dieser Ruhelage werden die Fische dann mittels des Eintaktklappenelements in das jeweilige der Aufnahmeelemente übergeben.

Eine weitere zweckmäßige Ausbildung der Erfindung ist dadurch gekennzeichnet, dass die Steuereinrichtung eingerichtet ist, die Klappenkaskade derart zu steuern, dass, sofern das Eintaktklappenelement von einer Offenstellung in eine Schließstellung bewegt wird, das Speicherklappenelement von einer Schließstellung in eine Offenstellung bewegt wird und umgekehrt. Auf diese Weise wird die Beschickungsleistung, also die Anzahl der pro Zeiteinheit mit der jeweiligen der Beschickungseinrichtungen zuführbaren Fische, der Beschickungseinrichtung weiter erhöht. So werden die erforderlichen Zeiten für das Bewegen des Eintaktklappenelements und des Speicherklappenelements sowie die Trägheit der Fische beim Beschleunigen auf der Führungsebene durch Schwerkraft seitens der Steuereinrichtung berücksichtigt, so dass beispielsweise das Speicherklappenelement einen Fisch bereits freigibt, während das Eintaktklappenelement die Schließstellung noch nicht erreicht hat.

Gemäß einer weiteren bevorzugten Ausführungsform ist im Bereich des Speicherklappenelements ein Sensormittel zur Fischerkennung angeordnet, das ausgebildet und eingerichtet ist, das Vorhandensein eines Fisches in einem Wartebereich vor dem Speicherklappenelement zu detektieren und an die Steuereinrichtung zu melden. Mittels des Sensormittels wird seitens der Steuereinrichtung automatisch erkannt, dass vor der Speicherklappe ein Fisch vorhanden ist. Die Steuereinrichtung ist insbesondere ausgebildet, diesen möglichst unmittelbar in den Haltebereich vor dem Eintaktklappenelement zu leiten, sobald der Haltebereich vor dem Eintaktklappenelement fischfrei ist.

Eine weitere zweckmäßige Ausgestaltung der Erfindung ist dadurch gekennzeichnet, dass mehrere der Beschickungseinrichtungen in Querförderrichtung jeweils um mindestens eine Breite der Aufnahmeelemente nebeneinander versetzt angeordnet sind. Dies bietet den Vorteil, dass die Zahl der pro Zeiteinheit in die Aufnahmeelemente überführbaren Fische und so die Gesamtdurchsatzleistung der erfindungsgemäßen Zuführeinrichtung gesteigert wird. Ein weiterer Vorteil besteht darin, dass die Aufnahmeelemente aufgrund der versetzten Anordnung der Beschickungseinrichtungen lückenlos erfolgen kann, also die Aufnahmeelemente beschickt werden können, ohne dass einige der Aufnahmeelemente leer bleiben. Auf diese Weise wird die vorhandene Förderkapazität des Querförderers optimal ausgenutzt. Der Querförderer ist insbesondere als ein Umlaufförderer ausgebildet und eingerichtet.

Eine zweckmäßige Ausgestaltung der Erfindung ist dadurch gekennzeichnet, dass jedes der Aufnahmeelemente jeweils um eine Querachse schwenkbar eingerichtet ist. Die Aufnahmeelemente des Querförderers sind derart schwenkbeweglich ausgebildet und eingerichtet, dass diese zum Übergeben der Fische an der jeweiligen der Übergabeeinrichtungen abkippbar eingerichtet sind, um die Fische an den jeweiligen der Längsförderer zu übergeben.

Eine bevorzugte Weiterbildung der Erfindung zeichnet sich dadurch aus, dass die Übergabeeinrichtungen jeweils eine Abwurfweiche umfassen, die ausgebildet und eingerichtet ist, das jeweilige der Aufnahmeelemente aus einer Fischtransportstellung in eine Fischabwurfstellung mittels eines von der Steuereinrichtung erzeugten Übergabesteuersignals zu verschwenken. In der Fischtransportstellung sind die Aufnahmeelemente daher bevorzugt waagerecht angeordnet und bilden eine entsprechende Transportebene, um die jeweils einzeln in einer der Aufnahmeelemente liegenden Fische in der Förderrichtung zu fördern. In der Fischabwurfstellung erfolgt eine Schrägstellung der Aufnahmeelemente, so dass die Fische unter Schwerkrafteinwirkung unter die von den Aufnahmeelementen gebildete Transportebene rutschen und an den jeweiligen der Längsförderer übergeben werden. Besonders bevorzugt umfasst die Abwurfweiche eine mittels des Übergabesteuersignals steuerbar eingerichtete Schwenkführung.

Eine weitere zweckmäßige Ausbildung der Erfindung ist dadurch gekennzeichnet, dass die Übergabeeinrichtungen jeweils im Bereich der Abwurfweiche Leitmittel umfassen, die eingerichtet sind, die Fische aus den Aufnahmeelementen in der Fischabwurfstellung auf den jeweiligen der Längsförderer unter Schwerkrafteinwirkung zu überführen. Die Leitmittel gewährleisten eine kontrollierte Übergabe der Fische an den jeweiligen der Längsförderer, so dass die Fische beschädigungsfrei und gezielt übergeben werden.

Gemäß einer weiteren bevorzugten Ausführungsform umfassen die Übergabeeinrichtungen jeweils Fischbelegungssensoren, die eingerichtet sind, an die Steuereinrichtung zu melden, ob der jeweilige der Längsförderer im Bereich der Übergabeeinrichtung durch einen der Fische belegt oder frei ist. Die Fischbelegungssensoren sind eingerichtet, an die Steuereinrichtung zu melden, ob an der jeweiligen der Übergabeeinrichtungen weitere Fische an den jeweiligen der Längsförderer übergeben werden können. Kommt es beispielsweise zu einem Ausfall einer der Fischbearbeitungseinrichtungen kann der jeweilige der Längsförderer temporär keine weiteren der Fische aufnehmen. Dies wird mittels der Fischbelegungssensoren zuverlässig erkannt und von der Steuereinrichtung bei der Übergabe der Fische mittels der Übergabeeinrichtungen auf Basis der vorbestimmten Verteilvorschrift berücksichtigt.

Eine weitere zweckmäßige Ausgestaltung der Erfindung ist dadurch gekennzeichnet, dass die Steuereinrichtung ausgebildet ist, die Aufnahmeelemente beim Beschicken derselben mit Fisch jeweils zu einer der Fischbearbeitungsmaschinen auf Basis der vorbestimmten Verteilvorschrift zuzuordnen und eine Zuordnungsvorschrift zu ermitteln. Die vorbestimmte Verteilvorschrift umfasst einen vorgegebenen Verteilungsschlüssel, nach dem die Fische an die jeweiligen der Fischbearbeitungseinrichtungen zugeteilt werden sollen. Auf Basis dieser vorbestimmten Verteilvorschrift, legt die Steuereinrichtung die Zuordnungsvorschrift fest, die jedes der beschickten Aufnahmeelemente einem der Längsförderer bzw. einer der jeweiligen Fischbearbeitungseinrichtungen zuordnet. Mit anderen Worten ist jedes der Aufnahmeelemente einer der Fischbearbeitungseinrichtungen initial zugeordnet. Sofern sich während des dynamischen Betriebs die Abnahmeleistungen der einzelnen der Fischbearbeitungseinrichtungen, beispielsweise durch Störungen oder andere für die jeweilige Durchsatzleistung relevante Ereignisse ändert, ist die Steuereinrichtung ausgebildet, die Verteilvorschrift und/oder die Zuordnungsvorschrift entsprechend anzupassen, um weiterhin eine optimale Zuführung der Fische zu den jeweiligen der Fischbearbeitungsmaschinen zu gewährleisten.

Gemäß einer weiteren bevorzugten Ausführungsform ist die Steuereinrichtung eingerichtet, die Positionen der Aufnahmeelemente zu ermitteln und die jeweiligen Abgabezeitpunkte anhand der Zuordnungsvorschrift und der ermittelten Positionen der Aufnahmeelemente zu bestimmen. Anders ausgedrückt ist die Steuereinrichtung ausgebildet, die Position der Aufnahmeelemente zu jedem Zeitpunkt nachzuverfolgen.

Eine zweckmäßige Ausgestaltung der Erfindung ist dadurch gekennzeichnet, dass die Steuereinrichtung ausgebildet ist, jeweils die Abnahmeleistungen der Fischbearbeitungsmaschinen und/oder die Belegungszustände der Übergabeeinrichtungen zu bestimmen und daraus jeweils eine Ist-Abnahmeleistung für jede der Fischbearbeitungseinrichtung zu ermitteln. Dies bietet den Vorteil, dass zu jeder Zeit, die Verteil- und/ oder Zuordnungsvorschrift in Abhängigkeit der jeweiligen Ist-Abnahmeleistungen optimal angepasst wird.

Gemäß einer weiteren bevorzugten Ausführungsform umfasst die Steuereinrichtung eine Vergleichereinheit, die angepasst ist, die Ist-Abnahmeleistung jeder der Fischbearbeitungseinrichtungen jeweils mit einer vorbestimmten, der jeweiligen Fischbearbeitungseinrichtung zugeordneten Soll-Abnahmeleistungen zu vergleichen und, falls mindestens eine der Ist-Abnahmeleistungen die jeweils zugeordnete Sollabnahmeleistung unterschreitet, die vorbestimmt Verteilvorschrift derart anzupassen, dass die jeweilige der Sollabnahmeleistungen zumindest temporär reduziert eingestellt wird. Auf diese Weise werden Minderabnahmen einzelner der Fischbearbeitungseinrichtungen seitens der Steuereinrichtung erfasst und die Zuführung der Fische an die Längsförderer entsprechend angepasst.

Eine weitere zweckmäßige Ausgestaltung der Erfindung ist dadurch gekennzeichnet, dass die Steuereinheit weiter eingerichtet ist, eine Gesamt-Ist-Abnahmeleistung als Summe der Ist-Abnahmeleistungen der Fischbearbeitungsmaschinen zu ermitteln und die Fördergeschwindigkeit des Querförderers derart zu steuern, dass das Beschicken der Aufnahmeelemente lückenlos erfolgt. Die lückenlose Befüllung der Aufnahmeelemente wirkt sich besonders vorteilhaft darauf aus, dass nach einem Stopp des Querförderers bzw. nach dem erneuten Beschleunigen des Querförderers auf die ursprüngliche Fördergeschwindigkeit die Aufnahmeelemente lückenlos beschickt worden sind, so dass sofort die maximale Zuführleistung bereitgestellt wird.

Die Aufgabe wird auch durch das eingangs genannte Verfahren gelöst und zeichnet sich durch Erzeugen eines Eintaktsteuersignals mittels der Steuereinrichtung und Ansteuern wenigstens eines steuerbeweglichen Eintaktklappenelements der Beschickungseinrichtung und Beschicken der Aufnahmeelemente mit Fisch zu einem vorgewählten Abgabezeitpunkt aus, wobei die Fische beim Beschicken der Aufnahmeelemente eine aus dem Eintaktklappenelement und einem diesem vorgeordneten, steuerbeweglichen Speicherklappenelement gebildete Klappenkaskade steuergetaktet durchlaufen.

Die mit dem erfindungsgemäßen Verfahren verbundenen Vorzüge sind bereits zuvor im Zusammenhang mit der erfindungsgemäßen Fischzuführeinrichtung erläutert worden. Zur Vermeidung von Wiederholungen wird auf die dort genannten Vorteile verwiesen, die in analoger Weise für das erfindungsgemäße Verfahren gelten.

Eine bevorzugte Weiterbildung der Erfindung zeichnet sich dadurch aus, dass die Fische aufgrund Schwerkrafteinwirkung selbsttätig in einer Schließstellung des Eintaktklappenelements vor diesem in einem ersten Haltebereich zu liegen kommen und in einer Offenstellung des Eintaktklappenelements sich selbsttätig in das jeweilige der Aufnahmeelemente in Richtung des Querförderers bewegen, indem die Fische eine geneigt angeordnete Führungsebene hinuntergleiten.

Eine weitere zweckmäßige Ausbildung der Erfindung ist dadurch gekennzeichnet, dass das Steuern der Klappenkaskade mittels der Steuereinrichtung derart erfolgt, dass, sofern sich das Eintaktklappenelement in der Offenstellung befindet, das Speicherklappenelement in einer Schließstellung ist, oder, sofern sich das Speicherklappenelement in einer Offenstellung befindet, das Eintaktklappenelement in der Schließstellung ist.

Gemäß einer weiteren bevorzugten Ausführungsform umfasst das erfindungsgemäße Verfahren ein Detektieren mittels eines Sensormittels, ob ein Wartebereich vor dem Speicherklappenelement mit einem der Fische belegt ist oder frei ist, und Melden des detektierten Zustandes an die Steuereinrichtung.

Eine weitere zweckmäßige Ausgestaltung der Erfindung ist gekennzeichnet durch Beschicken der Aufnahmeelemente mittels mehrerer in Querförderrichtung jeweils um mindestens eine Breite der Aufnahmeelemente nebeneinander versetzt angeordneter Beschickungseinrichtungen.

Eine weitere vorteilhafte Ausbildung der Erfindung ist gekennzeichnet durch Erzeugen eines Übergabesteuersignals mittels der Steuereinrichtung und Bewirken einer Schwenkbewegung der Aufnahmeelemente aus einer Fischtransportstellung in eine Fischabwurfstellung mittels jeweils einer Abwurfweiche jeweils zum Übergeben eines der Fische aus einem Aufnahmeelement an den jeweiligen der Längsförderer.

Eine zweckmäßige Ausgestaltung der Erfindung ist gekennzeichnet durch Überleiten der Fische auf den jeweiligen Längsförderer unter Schwerkrafteinwirkung jeweils im Bereich der Abwurfweiche mittels Leitmitteln.

Eine bevorzugte Weiterbildung der Erfindung ist gekennzeichnet durch Erfassen der Belegungszustände der Übergabeeinrichtungen mittels Fischbelegungssensoren und Melden, ob der jeweilige der Längsförderer im Bereich der Übergabeeinrichtung durch einen der Fische belegt ist oder frei ist, durch Übermitteln der erfassten Belegungszustände an die Steuereinrichtung.

Gemäß einer weiteren bevorzugten Ausbildung der Erfindung wird der Querförderer mittels einer steuerbaren Antriebseinheit angetrieben und die Fördergeschwindigkeit mittels der Steuereinrichtung eingestellt.

Eine weitere zweckmäßige Ausbildung der Erfindung ist gekennzeichnet durch Zuordnen der Aufnahmeelemente beim Beschicken derselben mit Fisch jeweils zu einer der Fischbearbeitungsmaschinen auf Basis der vorbestimmten Verteilvorschrift und Erstellen einer Zuordnungsvorschrift.

Eine zweckmäßige Ausgestaltung der Erfindung ist gekennzeichnet durch Ermitteln der Positionen der Aufnahmeelemente und Bestimmen der jeweiligen Abgabezeitpunkte anhand der Zuordnungsvorschrift und der ermittelten Positionen der Aufnahmeelemente.

Gemäß einer weiteren bevorzugten Ausführungsform werden Abnahmeleistungen der Fischbearbeitungsmaschinen und/oder der Belegungszustände der Übergabeeinrichtungen überwacht und daraus die Ist-Abnahmeleistungen für jede der Fischbearbeitungseinrichtungen ermittelt.

Eine weitere zweckmäßige Ausbildung der Erfindung ist gekennzeichnet durch Vergleichen der Ist-Abnahmeleistung jeder der Fischbearbeitungseinrichtungen jeweils mit einer vorbestimmten, der jeweiligen Fischbearbeitungseinrichtung zugeordneten SollAbnahmeleistung und, falls mindestens eine der Ist-Abnahmeleistungen die jeweils zugeordnete Sollabnahmeleistung unterschreitet, Anpassen der vorbestimmten Verteilvorschrift derart, dass die jeweilige der Sollabnahmeleistungen zumindest temporär reduziert wird.

Eine weitere zweckmäßige Ausbildung der Erfindung ist gekennzeichnet durch Ermitteln einer Gesamt-Ist-Abnahmeleistung als Summe der Ist-Abnahmeleistungen der Fischbearbeitungsmaschinen und Steuern der Fördergeschwindigkeit des Querförderers derart, dass das Beschicken der Aufnahmeelemente lückenlos erfolgt.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. Zur Vermeidung von Wiederholungen wird im Folgenden jeweils das erfindungsgemäße Verfahren zusammen mit der erfindungsgemäßen Fischzuführeinrichtung näher erläutert. In der Zeichnung zeigt:
Fig. 1 eine perspektivische Ansicht einer beispielhaften erfindungsgemäßen Fischzuführeinrichtung mit drei Beschickungseinrichtungen sowie acht Längsförderern,
Fig. 2 eine perspektivische Ansicht des erfindungsgemäßen Querförderers mit einer Übergabeeinrichtung,

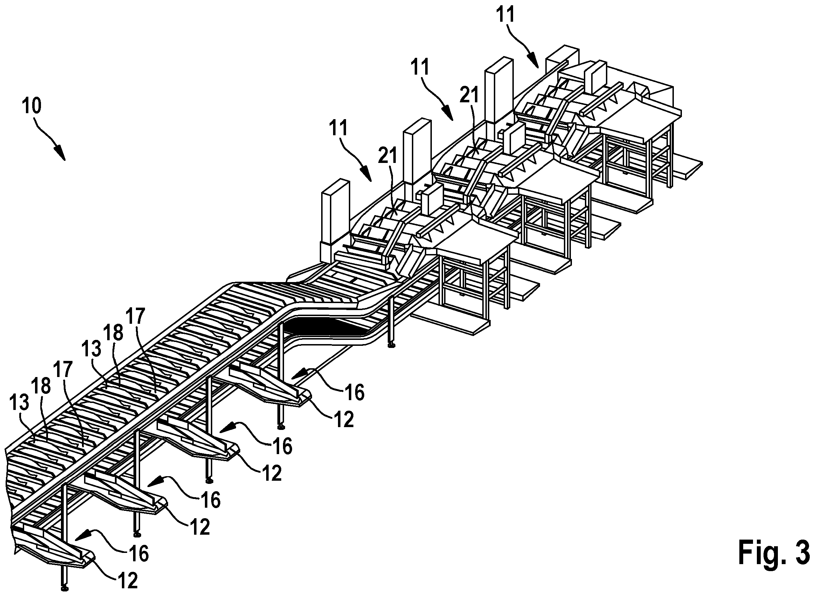

Fig. 3 einen Teilausschnitt der in Figur 1 gezeigten Fischzuführeinrichtung,
Fig. 4 eine beispielhafte Ausführung einer der Beschickungseinrichtungen in perspektivischer Darstellung,
Fig. 5 eine perspektivische Detailansicht des Querförderers und einer Übergabeeinrichtung,
Fig. 6 die in Figur 5 gezeigte Detailansicht aus rückwärtiger Perspektive,
   und
Fig.7 die in den Figuren 5 und 6 gezeigte Detailansicht mit Blickrichtung von unten.

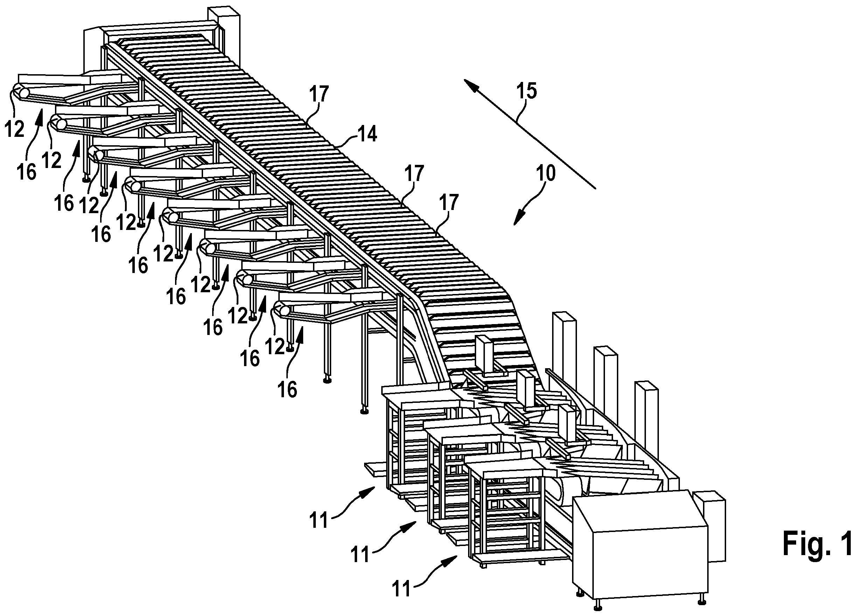

Figur 1 zeigt eine perspektivische Ansicht einer erfindungsgemäßen Fischzuführeinrichtung 10. Beispielhaft ist die Fischzuführeinrichtung 10 mit jeweils drei Beschickungseinrichtungen 11 sowie acht Längsförderern 12 ausgebildet. Mittels der Längsförderer 12 werden - in Figur 1 nicht gezeigte - Fische 13 an mehrere Fischbearbeitungseinrichtungen geleitet. Die Fischbearbeitungseinrichtungen, beispielsweise Schlacht- und/oder Entweidemaschinen, sind in der Zeichnung aus Gründen der besseren Übersichtlichkeit nicht gezeigt. Die gezeigte Anzahl an Fischzuführungseinrichtungen 10 sowie die Anzahl der Längsförderer 12 ist selbstverständlich nicht auf die in Figur 1 gezeigt Anzahl beschränkt, sondern rein beispielhaft. Wie eingangs erläutert, besteht ein wesentlicher Vorteil der vorliegenden Erfindung darin, dass die Anzahl der Beschickungseinrichtungen 11 sowie die Anzahl der Längsförderer 12 und der darüber angeschlossenen Fischbearbeitungsmaschinen je nach Anwendungsfall beliebig konfigurierbar eingerichtet ist.

Die erfindungsgemäße Fischzuführeinrichtung 10 umfasst einen Querförderer 14, der zum Fördern der Fische 13 quer zu ihrer Kopf-Schwanz-Ausrichtung in Querförderrichtung 15 eingerichtet ist. Die Kopf-Schwanz-Ausrichtung orientiert sich an einer gedachten Achse, die jeweils vom Kopf bis zum Schwanz der Fische 13 verläuft. Die Fische 13 werden mittels des Querförderers 14 quer zu dieser Achse in Querförderrichtung 15 gefördert. Die Querförderrichtung 15 und die genannte Achse bilden dabei einen rechten Winkel bzw. einen annähernd rechten Winkel. Die Orientierung der Fische 13, also die Richtung, in die der Kopf der Fische 13 zeigt, ist grundsätzlich beliebig. Vorzugsweise sind die Fische auf dem Querförderer 14 jedoch derart orientiert, dass diese anschließend mittels der Längsförderer 12 mit dem Schwanz voraus gefördert werden.

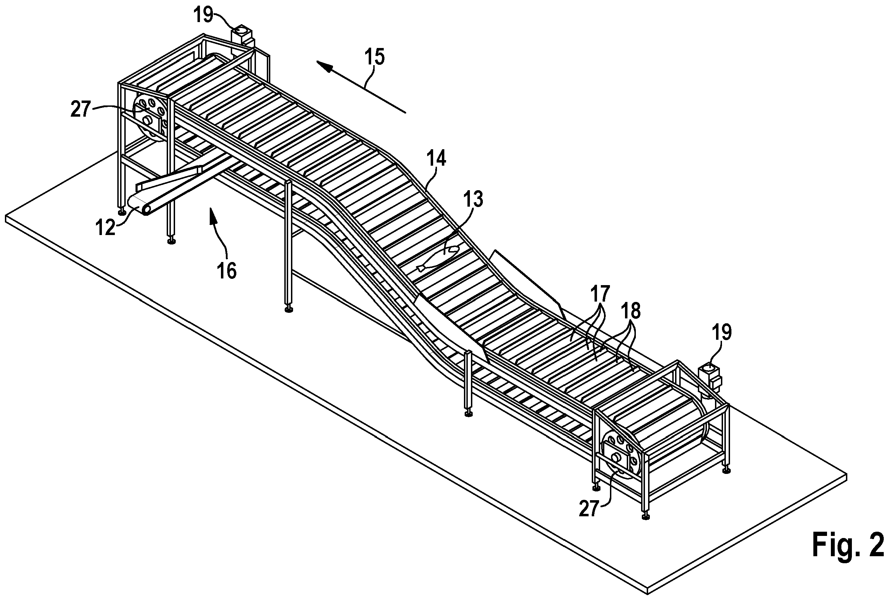

Aus Fig. 2, die eine perspektivische Ansicht des erfindungsgemäßen Querförderers 14 mit nur einer Übergabeeinrichtung 16 zeigt, geht hervor, dass der Querförderer 14 eine Vielzahl von jeweils zur Einzelaufnahme eines der Fische 13 ausgebildete Aufnahmeelemente 17 umfasst. Die Länge der Aufnahmeelemente 17 ist jeweils größer als die größte Länge der Fische 13 gewählt. Vorzugsweise weisen die Aufnahmeelemente 17 Randelemente 18 auf, die gegenüber dem Boden der Aufnahmeelemente 17 nach oben hervorstehen, so dass die Fische 13 sicher in Querförderrichtung 15 von den Aufnahmeelementen 17 gefördert werden. Weiter bevorzugt ist der Boden zur Mitte der Aufnahmeelemente 17 hin geneigt ausgebildet, so dass die Fische 13 in dem Aufnahmeelement 17 unter Schwerkrafteinwirkung selbsttätigt zentriert werden. Der Querförderer 14 weist eine steuerbar eingerichtete Antriebseinheit 19 auf, die beispielsweise einen oder mehrere steuerbare servomotorische Antriebe umfassen.

Wie in Figur 1 beispielhaft gezeigt, umfassen die erfindungsgemäße Fischzuführeinrichtung 10 mindestens eine zum Beschicken der Aufnahmeelemente 17 des Querförderers 14 mit den Fischen 13 eingerichtete der Beschickungseinrichtung 11. Die Fische 13 werden vorzugsweise durch Bedienpersonal manuell an die Beschickungseinrichtungen 11 übergeben, die dann die Aufnahmeelemente 17 des Querförderers 14 vollautomatisch mit den Fischen 13 beschicken. Die Beschickungseinrichtungen 11 sowie die Aufnahmeelemente 17 sind so eingerichtet, dass jedes der Aufnahmeelemente 17 jeweils mit einem der Fische 13 beschickt werden kann.

Weiter umfasst die erfindungsgemäße Fischzuführeinrichtung 10 mehrere der Übergabeeinrichtungen 16, die zur selektiven Übergabe der Fische von dem Querförderer 14 an die jeweils den Fischbearbeitungseinrichtungen vorgeordneten Längsförderer 12 ausgebildet sind.

Mittels einer - in der Zeichnung nicht gezeigten - Steuereinrichtung werden die mindestens eine Beschickungseinrichtung 11, die Übergabeeinrichtungen 16 sowie die Fördergeschwindigkeit des Querförderers 14 auf Basis mindestens einer vorbestimmten Verteilvorschrift gesteuert. Mit anderen Worten ist die Steuereinrichtung zur Steuerung bzw. Regelung der vorgenannten Komponenten eingerichtet und ausgebildet.

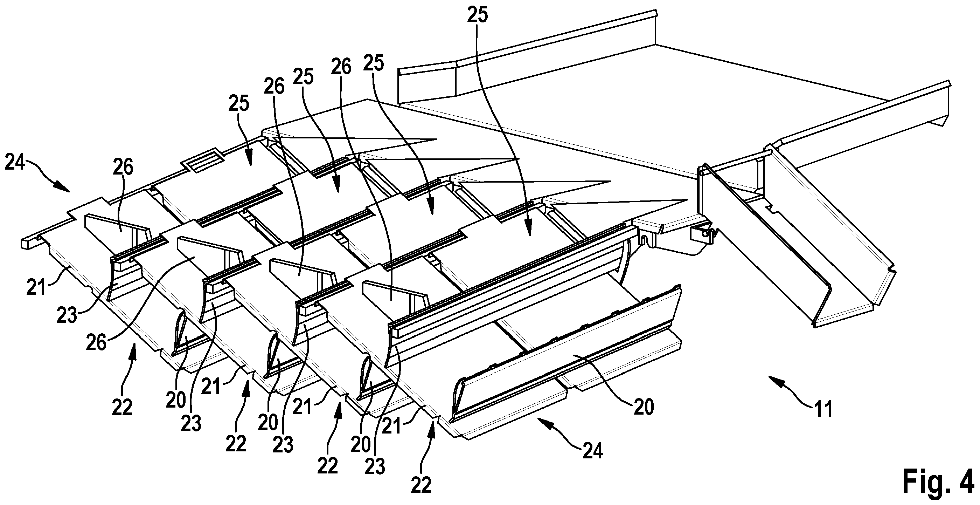

Erfindungsgemäß umfasst die in Fig. 4 beispielhaft dargestellte Beschickungseinrichtung 11 wenigstens ein steuerbewegliches Eintaktklappenelement. Dieses ist eingerichtet, mittels eines von der Steuereinrichtung erzeugten Eintaktsteuersignals, um jeweils das Beschicken eines der Aufnahmeelemente 17 mit Fisch 13 zu einem vorgewählten Abgabezeitpunkt zu steuern. Mit anderen Worten ist die Steuereinrichtung derart ausgebildet und eingerichtet, dass mittels des Eintaktklappenelements 20 - sofern nach der vorbestimmten Verteilvorschrift ein Beschicken mit Fisch 13 vorgesehen ist - einer der Fische 13 in das jeweils das Eintaktklappenelement 20 passierende Aufnahmeelement 17 überführt wird, so dass das Aufnahmeelement 17 mit einem einzelnen der Fische 13 beschickt wird.

Vorteilhafterweise umfasst die Beschickungseinrichtung 11 eine derart geneigt angeordnete Führungsebene 21, dass die Fische 13 aufgrund Schwerkrafteinwirkung selbsttätig in einer Schließstellung des Eintaktklappenelements 20 vor diesem in einem ersten Haltebereich 22 zu liegen kommen und in einer Offenstellung des Eintaktklappenelements 20 sich selbsttätig in das jeweilige der Aufnahmeelemente 17 in Richtung des Querförderers 14 bewegen. In Fig. 4 ist das Eintaktklappenelement 20 jeweils in der Schließstellung gezeigt.

Erfindungsgemäß umfasst die Beschickungseinrichtung 11 ein steuerbewegliches Speicherklappenelement 23. Das Speicherklappenelement 23 bildet mit dem Eintaktklappenelement 20 eine Klappenkaskade 24. Die Fische 13 werden über die Führungsebene 21 in einen Wartebereich 25 vor dem Speicherklappenelement 23 eingebracht. In einer Offenstellung des Speicherklappenelements 23 gelangt der jeweilige der Fische 13 unter Schwerkrafteinfluss in den ersten Haltebereich 22 und kommt vor dem in Schließstellung befindlichen Eintaktklappenelement 20 zu liegen, bis dieses in die Offenstellung bewegt wird und der Fisch 13 so - wie zuvor beschrieben - in das jeweilige der Aufnahmeelemente 17 gelangt.

Vorteilhafterweise ist die Steuereinrichtung eingerichtet, die Klappenkaskade 24 derart zu steuern, dass, sofern das Eintaktklappenelement 20 von der Offenstellung in die Schließstellung bewegt wird, das Speicherklappenelement 23 von der Schließstellung in die Offenstellung bewegt wird und umgekehrt. Die Steuereinrichtung ist folglich eingerichtet, in Kenntnis des Trägheitsverhaltens der Fische 13, die auftretenden Verzögerungen derart zu berücksichtigen, dass der Öffnungsvorgang des Speicherklappenelements 23 beispielsweise bereits schon beginnt, wenn das Eintaktklappenelement 20 sich noch in der Offenstellung befindet. Es wird jedoch sichergestellt, dass das Eintaktklappenelement 20 sich bereits in der Schließstellung befindet bzw. sich bereits so weit geschlossen hat, dass der jeweilige der Fische 13 in dem ersten Haltebereich 22 zu liegen kommt. Auf diese Weise wird sichergestellt, dass der Fisch 13 zumindest in dem ersten Haltebereich 22 zeitweilig in Ruhe verharrt.

Gemäß einer bevorzugten Ausbildung der Erfindung ist im Bereich des Speicherklappenelements 23 ein Sensormittel 26 zur Fischerkennung angeordnet. Das Sensormittel ist ausgebildet und eingerichtet, das Vorhandensein eines der Fische 13 in dem Wartebereich 25 vor dem Speicherklappenelement 23 zu detektieren und an die Steuereinrichtung zu melden.

Vorteilhafterweise sind mehrere der Beschickungseinrichtung 11 in Querförderrichtung 15 jeweils um mindestens eine Breite der Aufnahmeelemente 17 nebeneinander versetzt angeordnet. Die Anzahl der versetzt angeordneten Beschickungseinrichtungen 11 ist bedarfsabhängig frei wählbar. Wie in der Figur 4 beispielhaft gezeigt, kann die erfindungsgemäße Fischzuführeinrichtung 10 vier der Beschickungseinrichtungen 11 umfassen. Die Beschickungseinrichtungen 11 sind bevorzugt jeweils um die Breite eines der Aufnahmeelemente 17 versetzt angeordnet, so dass jeweils aufeinanderfolgende der Aufnahmeelement 17 lückenlos beschickt werden können.

Die Aufnahmeelemente 17 des Querförderers 14 bilden vorzugsweise einen Umlaufförderer. Die den Querförderer 14 bildenden Aufnahmeelemente 17 sind jeweils über mindestens zwei jeweils mit der Antriebseinheit 19 angetriebene Antriebsräder 27 geführt. Besonderes bevorzugt ist jedes der Aufnahmeelemente 17 jeweils um eine Querachse 33 schwenkbar eingerichtet. Anders ausgedrückt sind die Aufnahmeelemente 17 und der Querförderer 14 derart ausgebildet, dass die Aufnahmeelemente 17 mittels der Steuereinrichtung abgekippt werden können. Der sich jeweils in dem Aufnahmeelement 17 befindende der Fische 13 wird so durch Schrägstellung des jeweiligen der Aufnahmeelemente 17 unter Schwerkrafteinwirkung aus diesem herausgleiten und im Bereich der Übergabeeinrichtungen 16 auf den jeweiligen der Längsförderer 12 geleitet.

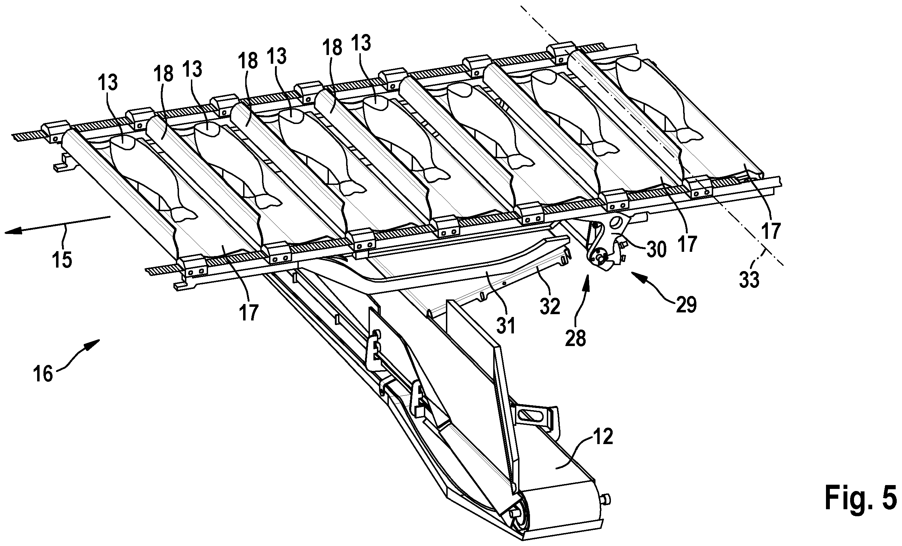

In Fig. 5 ist der Querförderer 14 und eine der Übergabeeinrichtung 16 im Detail perspektivisch dargestellt. Die Übergabeeinrichtungen 16 umfassen jeweils eine Abwurfweiche 28, die ausgebildet und eingerichtet ist, das jeweilige der Aufnahmeelemente 17 aus einer Fischtransportstellung in eine Fischabwurfstellung mittels eines von der Steuereinrichtung erzeugten Übergabesteuersignals zu verschwenken. Die Fischabwurfstellung entspricht der zuvor beschriebenen Schrägstellung des jeweiligen der Aufnahmeelemente 17, wobei in der Zeichnung jeweils nur die Fischtransportstellung gezeigt ist.

Eine bevorzugte Weiterbildung ist dadurch gekennzeichnet, dass die Abwurfweiche 28 eine mittels des Übergabesteuersignals steuerbar eingerichtete Schwenkführung 29 umfasst. Die Schwenkführung 29 umfasst jeweils Schwenkelemente 30. In der Fischtransportstellung sind die Schwenkelemente 30, wie in den Figuren 4 und 5 gezeigt, so ausgerichtet, dass die Aufnahmeelemente 17 in der Querförderrichtung 15 geführt werden. Wird mittels des Übergabesteuersignals das Schwenkelement 30 in eine untere - in der Zeichnung nicht gezeigte - Stellung verschwenkt, wird der bezüglich der Querförderrichtung 15 jeweils hintere Teil der Aufnahmeelemente 17 um die Querachse 33 abgekippt, indem der hintere Teil der Aufnahmeelemente 17 über das Schwenkelement 30 und die Umlenkführung 31 geführt wird, so dass das jeweilige der Aufnahmeelemente 17 in die Fischabwurfstellung verbracht wird.

Vorzugsweise umfassen die Übergabeeinrichtungen jeweils im Bereich der Abwurfweiche 28 Leitmittel 32, die eingerichtet sind, die Fische 13 aus den Aufnahmeelementen 17 in der Fischabwurfstellung auf den jeweiligen der Längsförderer 12 unter Schwerkrafteinwirkung zu überführen.

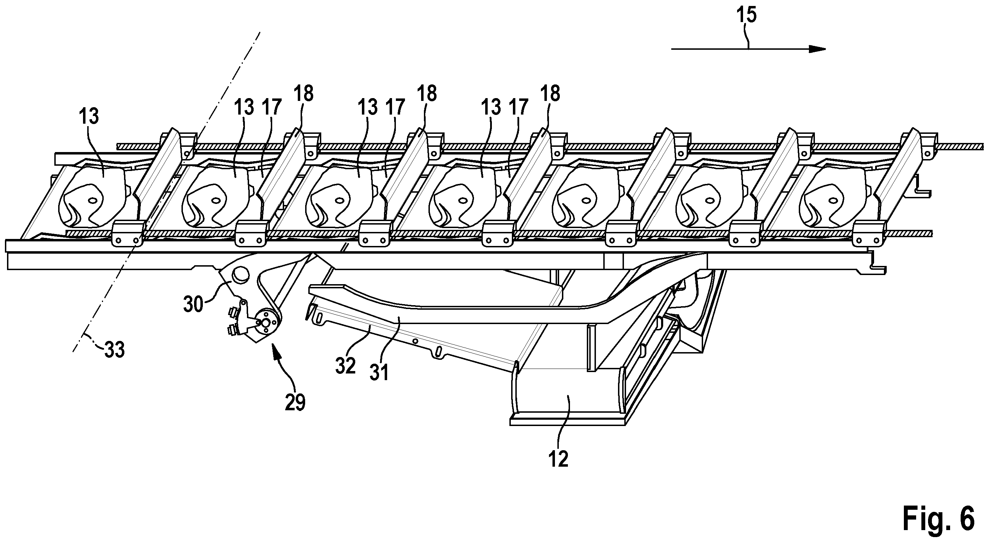

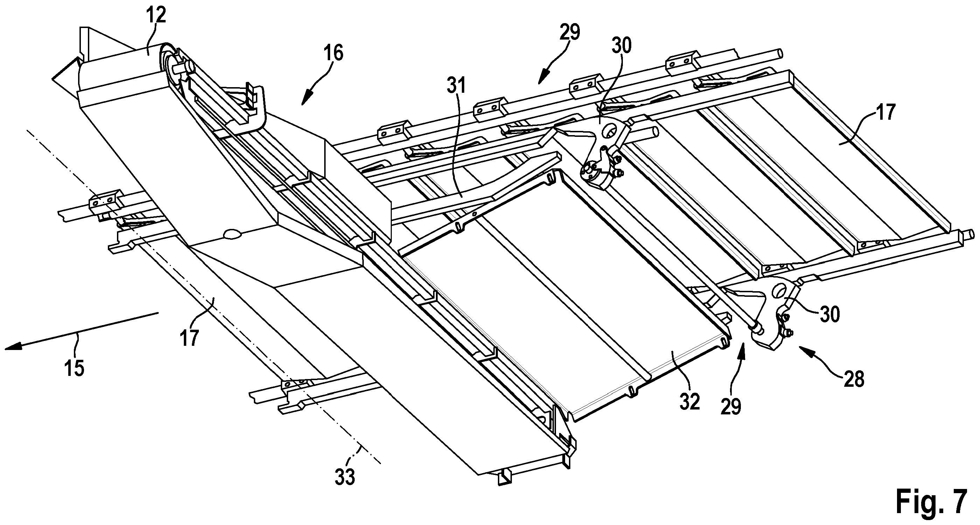

In den Figuren 6 und 7 ist die in Figur 5 gezeigte Detailansicht aus rückwärtiger Perspektive bzw. mit Blickrichtung von unten ergänzend gezeigt.

Gemäß einer weiteren vorteilhaften Ausbildung der Erfindung ist vorgesehen, dass die Übergabeeinrichtungen 16 jeweils - in der Zeichnung nicht gezeigte - Fischbelegungssensoren umfassen. Die Fischbelegungssensoren sind eingerichtet, an die Steuereinrichtung zu melden, ob der jeweilige der Längsförderer 12 im Bereich der Übergabeeinrichtung 16 durch einen der Fische 13 belegt oder frei ist.

Bevorzugt ist die Steuereinrichtung ausgebildet, die Aufnahmeelemente 17 beim Beschicken derselben mit Fisch 13 jeweils zu einer der Fischbearbeitungsmaschinen auf Basis der vorbestimmten Verteilvorschrift zuzuordnen und eine Zuordnungsvorschrift zu ermitteln. Weiter ist die Steuereinrichtung insbesondere dazu eingerichtet, die Positionen der Aufnahmeelemente 17 zu ermitteln und die jeweiligen Abgabezeitpunkte anhand der Zuordnungsvorschrift und der ermittelten Positionen der Aufnahmeelemente 17 zu bestimmen. Die Positionsermittlung kann beispielsweise durch einen Referenzsensor erfolgen, der das Passieren einer der Aufnahmeelemente 17 an einer Referenzposition erfasst. Da die Steuereinrichtung eingerichtet ist, zugleich die Fördergeschwindigkeit des Querförderers 14 vorzugeben und einzustellen, ist diese weiter bevorzugt eingerichtet, die Positionen der Aufnahmeelemente 17 auf Basis der von dem Referenzsensor gelieferten Positionssignale und der Fördergeschwindigkeit zu ermitteln.

Vorteilhafterweise ist die Steuereinrichtung ausgebildet, jeweils die Abnahmeleistungen der Fischbearbeitungsmaschinen und/oder die Belegungszustände der Übergabeeinrichtungen 16 zu bestimmen und daraus jeweils eine Ist-Abnahmeleistung für jede der Fischbearbeitungseinrichtung zu ermitteln.

Gemäß einer weiteren bevorzugten Ausbildung der Erfindung umfasst die Steuereinrichtung eine Vergleichereinheit, die angepasst ist, die Ist-Abnahmeleistung jeder der Fischbearbeitungseinrichtungen jeweils mit einer vorbestimmten, der jeweiligen Fischbearbeitungseinrichtung zugeordneten Soll-Abnahmeleistungen zu vergleichen und, falls mindestens eine der Ist-Abnahmeleistungen die jeweils zugeordneten Sollabnahmeleistung unterschreitet, die vorbestimmten Verteilvorschrift derart anzupassen, dass die jeweilige der Sollabnahmeleistungen zumindest temporär reduziert eingestellt wird.

Bevorzugt ist die Steuereinheit weiter eingerichtet, eine Gesamt-Ist-Abnahmeleistung als Summe der Ist-Abnahmeleistungen der Fischbearbeitungsmaschinen zu ermitteln und die Fördergeschwindigkeit des Querförderers 14 derart zu steuern, dass das Beschicken der Aufnahmeelemente 17 lückenlos erfolgt.

## Patentansprüche

1. Fischzuführeinrichtung (10), eingerichtet und ausgebildet zum Zuführen von Fischen (13) an mehrere Fischbearbeitungseinrichtungen, umfassend
einen zum Fördern der Fische (13) quer zu ihrer Kopf-Schwanz-Ausrichtung in Querförderrichtung (15) eingerichteten Querförderer (14), wobei der Querförderer (14) eine Vielzahl von jeweils zur Einzelaufnahme eines der Fische (13) ausgebildeten Aufnahmeelementen (17) umfasst und der Querförderer (14) eine steuerbar eingerichtete Antriebseinheit (19) aufweist,
mindestens eine zum Beschicken der Aufnahmeelemente (17) des Querförderers (14) mit den Fischen eingerichtete Beschickungseinrichtung (11),
mehrere Übergabeeinrichtungen (16), die zur selektiven Übergabe der Fische (13) von dem Querförderer an jeweils den Fischbearbeitungseinrichtungen vorgeordnete Längsförderer (12) ausgebildet sind, wobei die Längsförderer (12) eingerichtet sind, die Fische (13) längs ihrer Kopf-Schwanz-Ausrichtung zu den Fischbearbeitungsmaschinen zu fördern, sowie
eine Steuereinrichtung, die eingerichtet ist, die mindestens eine Beschickungseinrichtung (11), die Übergabeeinrichtungen (16) sowie die Fördergeschwindigkeit des Querförderers (14) auf Basis mindestens einer vorbestimmten Verteilvorschrift zu steuern,
**dadurch gekennzeichnet, dass**
die mindestens eine Beschickungseinrichtung (11) wenigstens ein steuerbewegliches Eintaktklappenelement (20) umfasst, das eingerichtet ist, mittels eines von der Steuereinrichtung erzeugten Eintaktsteuersignals jeweils das Beschicken eines der Aufnahmeelemente (17) mit Fisch (13) zu einem vorgewählten Abgabezeitpunkt zu steuern, wobei
die Beschickungseinrichtung (11) ein steuerbewegliches Speicherklappenelement (23) umfasst, und wobei das Speicherklappenelement (23) unter Bildung einer Klappenkaskade (24) dem Eintaktklappenelement (20) vorgeordnet ist.

2. Fischzuführeinrichtung nach Anspruch 1, **dadurch gekennzeichnet, dass** die Beschickungseinrichtung (11) eine derart geneigt angeordnete Führungsebene (21) umfasst, dass die Fische (13) aufgrund Schwerkrafteinwirkung selbsttätig in einer Schließstellung des Eintaktklappenelements (20) vor dieser in einem ersten Haltebereich (22) zu liegen kommen und in einer Offenstellung des Eintaktklappenelements (20) sich selbsttätig in das jeweilige der Aufnahmeelemente (17) in Richtung des Querförderers (14) bewegen.

3. Fischzuführeinrichtung nach Anspruch 2, **dadurch gekennzeichnet, dass** die Steuereinrichtung eingerichtet ist, die Klappenkaskade (24) derart zu steuern, dass, sofern das Eintaktklappenelement (20) von einer Offenstellung in eine Schließstellung bewegt wird, das Speicherklappenelement (23) von einer Schließstellung in eine Offenstellung bewegt wird und umgekehrt.

4. Fischzuführeinrichtung nach Anspruch 3, **dadurch gekennzeichnet, dass** im Bereich des Speicherklappenelements (23) ein Sensormittel (26) zur Fischerkennung angeordnet ist, das ausgebildet und eingerichtet ist, das Vorhandensein eines Fisches (13) in einem Wartebereich (25) vor dem Speicherklappenelement (23) zu detektieren und an die Steuereinrichtung zu melden.

5. Fischzuführeinrichtung nach einem der Ansprüche 1 bis 4, **dadurch gekennzeichnet, dass** mehrere der Beschickungseinrichtungen (11) in Querförderrichtung (15) jeweils um mindestens eine Breite der Aufnahmeelemente (17) nebeneinander versetzt angeordnet sind.

6. Fischzuführeinrichtung nach einem der Ansprüche 1 bis 5, **dadurch gekennzeichnet, dass** die Aufnahmeelemente (17) des Querförderers (14) einen Umlaufförderer bilden.

7. Fischzuführeinrichtung nach einem der Ansprüche 1 bis 6, **dadurch gekennzeichnet, dass** jedes der Aufnahmeelemente (17) jeweils um eine Querachse (33) schwenkbar eingerichtet ist.

8. Fischzuführeinrichtung nach Anspruch 7, **dadurch gekennzeichnet, dass** die Übergabeeinrichtungen (16) jeweils eine Abwurfweiche (28) umfassen, die ausgebildet und eingerichtet ist, das jeweilige der Aufnahmeelemente (17) aus einer Fischtransportstellung in eine Fischabwurfstellung mittels eines von der Steuereinrichtung erzeugten Übergabesteuersignals zu verschwenken.

9. Fischzuführeinrichtung nach Anspruch 8, **dadurch gekennzeichnet, dass** die Abwurfweiche (28) eine mittels des Übergabesteuersignals steuerbar eingerichtete Schwenkführung (29) umfasst.

10. Fischzuführeinrichtung nach einem der Ansprüche 7 bis 9, **dadurch gekennzeichnet, dass** die Übergabeeinrichtungen (16) jeweils im Bereich der Abwurfweiche (28) Leitmittel (32) umfassen, die eingerichtet sind, die Fische aus den Aufnahmeelementen (17) in der Fischabwurfstellung auf den jeweiligen der Längsförderer (12) unter Schwerkrafteinwirkung zu überführen.

11. Fischzuführeinrichtung nach einem der Ansprüche 1 bis 10, **dadurch gekennzeichnet, dass** die Übergabeeinrichtungen (16) jeweils Fischbelegungssensoren umfassen, die eingerichtet sind, an die Steuereinrichtung zu melden, ob dejeweilige der Längsförderer (12) im Bereich der Übergabeeinrichtung (16) durch einen der Fische (13) belegt oder frei ist.

12. Fischzuführeinrichtung nach einem der Ansprüche 1 bis 11, **dadurch gekennzeichnet, dass** die Steuereinrichtung ausgebildet ist, die Aufnahmeelemente (17) beim Beschicken derselben mit Fisch (13) jeweils zu einer der Fischbearbeitungsmaschinen auf Basis der vorbestimmten Verteilvorschrift zuzuordnen und eine Zuordnungsvorschrift zu ermitteln.

13. Fischzuführeinrichtung nach Anspruch 12, **dadurch gekennzeichnet, dass** die Steuereinrichtung eingerichtet ist, die Positionen der Aufnahmeelemente (17) zu ermitteln und die jeweiligen Abgabezeitpunkte anhand der Zuordnungsvorschrift und der ermittelten Positionen der Aufnahmeelemente (17) zu bestimmen.

14. Fischzuführeinrichtung nach einem der Ansprüche 1 bis 13, **dadurch gekennzeichnet, dass** die Steuereinrichtung ausgebildet ist, jeweils die Abnahmeleistungen der Fischbearbeitungsmaschinen und/oder die Belegungszustände der Übergabeeinrichtungen (16) zu bestimmen und daraus jeweils eine Ist-Abnahmeleistung für jede der Fischbearbeitungseinrichtungen zu ermitteln.

15. Fischzuführeinrichtung nach Anspruch 14, **dadurch gekennzeichnet, dass** die Steuereinrichtung eine Vergleichereinheit umfasst, die angepasst ist, die Ist-Abnahmeleistung jeder der Fischbearbeitungseinrichtungen jeweils mit einer vorbestimmten der jeweiligen Fischbearbeitungseinrichtung zugeordneten Soll-Abnahmeleistungen zu vergleichen und, falls mindestens eine der Ist-Abnahmeleistungen die jeweils zugeordnete Sollabnahmeleistung unterschreitet, die vorbestimmt Verteilvorschrift derart anzupassen, dass die jeweilige der Sollabnahmeleistungen zumindest temporär reduziert eingestellt wird.

16. Fischzuführeinrichtung nach Anspruch 15, **dadurch gekennzeichnet, dass** die Steuereinheit weiter eingerichtet ist, eine Gesamt-Ist-Abnahmeleistung als Summe der Ist-Abnahmeleistungen der Fischbearbeitungsmaschinen zu ermitteln und die Fördergeschwindigkeit des Querförderers (14) derart zu steuern, dass das Beschicken der Aufnahmeelemente (17) lückenlos erfolgt.

17. Verfahren zum Zuführen von Fischen an mehrere Fischbearbeitungsmaschinen, umfassend die Schritte:
- Fördern der Fische (13) quer zu ihrer Kopf-Schwanz-Ausrichtung in Querförderrichtung (15) mittels einer Vielzahl von jeweils zur Einzelaufnahme eines der Fische ausgebildeten Aufnahmeelementen (17) eines Querförderers (14),
- Beschicken der Aufnahmeelemente (17) des Querförderers (14) mittels einer Beschickungseinrichtung (11),
- selektives Übergeben der Fische (13) von dem Querförderer (14) an jeweils den Fischbearbeitungsmaschinen vorgeordnete Längsförderer (12) mittels Übergabeeinrichtungen (16),
- Fördern der übergebenen Fische (13) längs ihrer Kopf-Schwanz-Ausrichtung zu den Fischbearbeitungsmaschinen mittels der Längsförderer (12),
- Steuern des Beschickens der Aufnahmeelemente (17) sowie des selektiven Übergebens der Fische (13) auf Basis mindestens einer vorbestimmten Verteilvorschrift,
**gekennzeichnet**
**durch** Erzeugen eines Eintaktsteuersignals mittels der Steuereinrichtung und Ansteuern wenigstens eines steuerbeweglichen Eintaktklappenelements (20) der Beschickungseinrichtung (11) und Beschicken der Aufnahmeelemente (17) mit Fisch zu einem vorgewählten Abgabezeitpunkt, wobei
die Fische (13) beim Beschicken der Aufnahmeelemente (17) eine aus dem Eintaktklappenelement (20) und einem diesem vorgeordneten, steuerbeweglichen Speicherklappenelement (23) gebildete Klappenkaskade (24) steuergetaktet durchlaufen.

18. Verfahren nach Anspruch 17, **dadurch gekennzeichnet, dass** die Fische aufgrund Schwerkrafteinwirkung selbsttätig in einer Schließstellung des Eintaktklappenelements (20) vor diesem in einem ersten Haltebereich zu liegen kommen und in einer Offenstellung des Eintaktklappenelements (20) sich selbsttätig in das jeweilige der Aufnahmeelemente (17) in Richtung des Querförderers (14) bewegen, indem die Fische (13) eine geneigt angeordnete Führungsebene (21) hinuntergleiten.

19. Verfahren nach Anspruch 18, **gekennzeichnet durch** das Steuern der Klappenkaskade (24) mittels der Steuereinrichtung derart, dass, sofern sich das Eintaktklappenelement (20) in der Offenstellung befindet, das Speicherklappenelement (23) in einer Schließstellung ist, oder, sofern sich das Speicherklappenelement (23) in einer Offenstellung befindet, das Eintaktklappenelement (20) in der Schließstellung ist.

20. Verfahren nach Anspruch 17 bis 19, **gekennzeichnet durch** Detektieren mittels eines Sensormittels (26), ob ein Wartebereich (25) vor dem Speicherklappenelement (23) mit einem der Fische (13) belegt ist oder frei ist, und Melden des detektierten Zustandes an die Steuereinrichtung.

21. Verfahren nach einem der Ansprüche 17 bis 20, **gekennzeichnet durch** Beschicken der Aufnahmeelemente (17) mittels mehrerer in Querförderrichtung (15) jeweils um mindestens eine Breite der Aufnahmeelemente (17) nebeneinander versetzt angeordnete Beschickungseinrichtungen (11).

22. Verfahren nach einem der Ansprüche 17 bis 21, **gekennzeichnet durch** Erzeugen eines Übergabesteuersignals mittels der Steuereinrichtung und Bewirken einer Schwenkbewegung der Aufnahmeelemente (17) aus einer Fischtransportstellung in eine Fischabwurfstellung mittels jeweils einer Abwurfweiche (28) jeweils zum Übergeben eines der Fische (13) aus einem Aufnahmeelement (17) an den jeweiligen der Längsförderer (12).

23. Verfahren nach einem der Ansprüche 17 bis 22, **gekennzeichnet durch** Überleiten der Fische (13) auf den jeweiligen Längsförderer (12) unter Schwerkrafteinwirkung jeweils im Bereich der Abwurfweiche mittels Leitmitteln (32).

24. Verfahren nach einem der Ansprüche 17 bis 23, **gekennzeichnet durch** Erfassen der Belegungszustände der Übergabeeinrichtungen (16) mittels Fischbelegungssensoren und melden, ob der jeweilige der Längsförderer (12) im Bereich der Übergabeeinrichtung (16) **durch** einen der Fische (13) belegt ist oder frei ist durch Übermitteln der erfassten Belegungszustände an die Steuereinrichtung.

25. Verfahren nach einem der Ansprüche 17 bis 24, **gekennzeichnet durch** Antreiben des Querförderers (14) mittels einer steuerbaren Antriebseinheit (19) und Einstellen der Fördergeschwindigkeit mittels der Steuereinrichtung.

26. Verfahren nach einem der Ansprüche 17 bis 25, **gekennzeichnet durch** Zuordnen der Aufnahmeelemente (17) beim Beschicken derselben mit Fisch (13) jeweils zu einer der Fischbearbeitungsmaschinen auf Basis der vorbestimmten Verteilvorschrift und Erstellen einer Zuordnungsvorschrift.

27. Verfahren nach Anspruch 26, **gekennzeichnet durch** Ermitteln der Positionen der Aufnahmeelemente (17) und Bestimmen der jeweiligen Abgabezeitpunkte anhand der Zuordnungsvorschrift und der ermittelten Positionen der Aufnahmeelemente (17).

28. Verfahren nach einem der Ansprüche 17 bis 27, **gekennzeichnet durch** Überwachen von Abnahmeleistungen der Fischbearbeitungsmaschinen und/oder der Belegungszustände der Übergabeeinrichtungen (16) und daraus Ermitteln der Ist-Abnahmeleistungen für jede der Fischbearbeitungseinrichtungen.

29. Verfahren nach Anspruch 28, **gekennzeichnet durch** Vergleichen der Ist-Abnahmeleistung jeder der Fischbearbeitungseinrichtungen jeweils mit einer vorbestimmten, der jeweiligen Fischbearbeitungseinrichtung zugeordneten Soll-Abnahmeleistungen und, falls mindestens eine der Ist-Abnahmeleistungen die jeweils zugeordneten Sollabnahmeleistung unterschreitet, Anpassen der vorbestimmten Verteilvorschrift derart, dass die jeweilige der Sollabnahmeleistungen zumindest temporär reduziert wird.

30. Verfahren nach einem der Ansprüche 28 oder 29, **gekennzeichnet durch** Ermitteln einer Gesamt-Ist-Abnahmeleistung als Summe der Ist-Abnahmeleistungen der Fischbearbeitungsmaschinen und Steuern der Fördergeschwindigkeit des Querförderers (14) derart, dass das Beschicken der Aufnahmeelemente (17) lückenlos erfolgt.

## Claims

1. Fish feed-in device (10) which is configured and designed to supply fish (13) to a plurality of fish-processing devices and comprises:
a transverse conveyor (14) designed to convey the fish (13) transversely to their head-tail orientation in a transverse conveying direction (15), wherein the transverse conveyor (14) comprises a plurality of receptacles (17) each designed to individually hold one of the fish (13), and the transverse conveyor (14) has a controllable drive unit (19),
at least one feeder device (11) which is designed to supply fish to the receptacles (17) of the transverse conveyor (14),
a plurality of transfer devices (16) which are designed to selectively transfer the fish (13) from the transverse conveyor to the longitudinal conveyors (12) arranged upstream of the respective fish-processing devices, wherein the longitudinal conveyors (12) are designed to convey the fish (13) in their head-tail orientation to the fish-processing machines, and
a control device, which is designed to control the at least one feeder device (11), the transfer devices (16) and the conveying speed of the transverse conveyor (14) on the basis of at least one predefined distribution specification,
**characterised in that** the at least one feeder device (11) comprises at least one clocking flap element (20) which is movable under control and configured, by means of a clocking control signal generated by the control device, to control the infeed of fish (13) to one of the receptacles (17) at a preselected output time.

2. Fish feed-in device according to claim 1, **characterised in that** the feeder device (11) comprises a guide plane (21) which is arranged inclined such that under the effect of gravity, the fish (13) automatically come to lie in a first retaining area (22) in front of the clocking flap element (20) when the latter is in a closed position, and automatically move in the direction of the transverse conveyor (14) into the respective receptacle (17) when said clocking flap element (20) is in an open position.

3. Fish feed-in device according to claim 2, **characterised in that** the control device is configured to control the flap cascade (24) such that when the clocking flap element (20) is moved from an open position to a closed position, the storage flap element (23) is moved from a closed position to an open position, and vice versa.

4. Fish feed-in device according to claim 3, **characterised in that** a sensor means (26) for fish detection is arranged in the region of the storage flap element (23), and is designed and configured to detect the presence of a fish (13) in a waiting area (25) in front of the storage flap element (23) and report this to the control device.

5. Fish feed-in device according to any one of claims 1 to 4, **characterised in that** several of the feeder devices (11) are arranged next to and offset to each other in the transverse conveying direction (15) by at least a width of the receptacle (17).

6. Fish feed-in device according to any one of claims 1 to 5, **characterised in that** the receptacles (17) of the transverse conveyor (14) form a circulating conveyor.

7. Fish feed-in device according to any one of claims 1 to 6, **characterised in that** each of the receptacles (17) is configured so as to be pivotable about a transverse axis (33).

8. Fish feed-in device according to claim 7, **characterised in that** the transfer devices (16) each comprise an ejecting diverter (28) which is configured and designed to pivot the respective receptacle (17) from a fish transport position into a fish ejection position by means of a transfer control signal generated by the control device.

9. Fish feed-in device according to claim 8, **characterised in that** the ejecting diverter (28) comprises a pivot guide (29) which is configured so as to be controllable by means of the transfer control signal.

10. Fish feed-in device according to any one of claims 7 to 9, **characterised in that** the transfer devices (16) each comprise guiding means (32) in the region of the ejecting diverter (28), which means are configured to transfer the fish from the receptacles (17) in the fish ejection position to the respective longitudinal conveyor (12) under the effect of gravity.

11. Fish feed-in device according to any one of claims 1 to 10, **characterised in that** the transfer devices (16) each comprise fish occupation sensors which are configured to report to the control device whether the respective longitudinal conveyor (12) is occupied by a fish (13) or is free in the region of the transfer device (16).

12. Fish feed-in device according to any one of claims 1 to 11, **characterised in that** the control device is configured to assign the receptacles (17), when supplied with fish (13), to a respective fish-processing machine on the basis of the predefined distribution specification and to determine an allocation specification.

13. Fish feed-in device according to claim 12, **characterised in that** the control device is configured to determine the positions of the receptacles (17) and determine the respective output times on the basis of the allocation specification and the determined positions of the receptacles (17).

14. Fish feed-in device according to any one of claims 1 to 13, **characterised in that** the control device is configured to determine the respective take-up performance of the fish-processing machines and/or the occupation states of the transfer devices (16) and from this determine the actual take-up performance for each of the fish-processing devices.

15. Fish feed-in device according to claim 14, **characterised in that** the control device comprises a comparison unit which is adapted to compare the actual take-up performance of each of the fish-processing devices with a predetermined nominal take-up performance assigned to the respective fish-processing device, and if at least one of the actual take-up performances falls below the respective assigned nominal take-up performance, to adapt the predefined distribution specification such that the respective nominal take-up performance is at least temporarily reduced.

16. Fish feed-in device according to claim 15, **characterised in that** the control device is furthermore configured to determine a total actual take-up performance as a sum of the actual take-up performances of the fish-processing machines, and control the conveying speed of the transverse conveyor (14) such that the infeed to the receptacles (17) is uninterrupted.

17. Method for supplying fish to a plurality of fish-processing machines, comprising the steps:
- conveying the fish (13) transversely to their head-tail orientation in the transverse conveying direction (15) by means of a plurality of receptacles (17) of a transverse conveyor (14) which are each designed to individually hold one of the fish,
- infeed to the receptacles (17) of the transverse conveyor (14) by means of a feeder device (11),
- selective transfer of the fish (13) by means of transfer devices (16) from the transverse conveyor (14) to respective longitudinal conveyors (12) arranged upstream of the fish-processing machines,
- conveying of the transferred fish (13) in their head-tail orientation to the fish-processing machines by means of the longitudinal conveyors (12),
- controlling the infeed to the receptacles (17) and the selective transfer of the fish (13) on the basis of at least one predefined distribution specification,
**characterised by** generation of a clocking control signal by means of the control device, and activation of at least one clocking flap element (20) of the feeder device (11) which is movable under control, and infeed of fish to the receptacles (17) at a preselected output time, wherein on infeed to the receptacles (17), the fish (13 pass under cyclic control through a flap cascade (24) formed by the clocking flap element (20) and a storage flap element (23) which is arranged upstream thereof and is movable under control.

18. Method according to claim 17, **characterised in that** under the effect of gravity, the fish (13) automatically come to lie in a first retaining area in front of the clocking flap element (20) when the latter is in a closed position, and automatically move in the direction of the transverse conveyor (14) into the respective receptacle (17) when said clocking flap element (20) is in an open position, **in that** the fish (13) slide down an inclined guide plane (21).

19. Method according to claim 18, **characterised by** the control of the flap cascade (24) by means of the control device such that when the clocking flap element (20) is in the open position, the storage flap element (23) is in a closed position, or when the storage flap element (23) is in an open position, the clocking flap element (20) is in the closed position.

20. Method according to claim 17 to 19, **characterised by** detection, by means of a sensor means (26), of whether a waiting area (25) in front of the storage flap element (23) is occupied by a fish (13) or is free, and reporting of the detected state to the control device.

21. Method according to any one of claims 17 to 20, **characterised by** infeed to the receptacles (17) by means of several feeder devices (11) arranged next to and offset to each other in the transverse conveying direction (15) by at least a width of the receptacles (17).

22. Method according to any one of claims 17 to 21, **characterised by** generation of a transfer control signal by means of the control device, and actuation of a pivot movement of the receptacles (17) from a fish transport position into a fish ejection position by means of one ejecting diverter (28), each, for transfer of one of the fish (13), each, from the receptacle (17) to the respective longitudinal conveyor (12).

23. Method according to any one of claims 17 to 22, **characterised by** guidance of the fish (13) to the respective longitudinal conveyor (12) under the effect of gravity in the region of the ejecting diverter by means of guiding means (32).

24. Method according to any one of claims 17 to 23, **characterised by** detection of the occupation state of the transfer devices (16) by means of fish occupation sensors, and reporting of whether the respective longitudinal conveyor (12) is occupied by a fish (13) or is free in the region of the transfer device (16), by transmission of the detected occupation state to the control device.

25. Method according to any one of claims 17 to 24, **characterised by** driving of the transverse conveyor (14) by means of a controllable drive unit (19) and setting of the conveying speed by means of the control device.

26. Method according to any one of claims 17 to 25, **characterised by** allocation of the receptacles (17), on infeed of fish (13) thereto, to a respective fish-processing machine on the basis of a predefined distribution specification, and production of an allocation specification.

27. Method according to claim 26, **characterised by** determination of the position of the receptacles (17) and determination of the respective output times on the basis of the allocation specification and the determined positions of the receptacles (17).

28. Method according to any one of claims 17 to 27, **characterised by** monitoring of take-up performances of the fish-processing machines and/or the occupation states of the transfer devices (16) and from this determining the actual take-up performances for each of the fish-processing devices.

29. Method according to claim 28, **characterised by** comparison of the actual take-up performance of each of the fish-processing devices with a predetermined nominal take-up performance assigned to the respective fish-processing device, and if at least one of the actual take-up performances falls below the respective assigned nominal take-up performance, adaptation of the predetermined distribution specification such that the respective nominal take-up performance is at least temporarily reduced.

30. Method according to one of claims 28 or 29, **characterised by** determination of a total actual take-up performance as a sum of the actual take-up performances of the fish-processing machines, and control of the conveying speed of the transverse conveyor (14) such that the infeed to the receptacles (17) is uninterrupted.

## Revendications

1. Dispositif d'amenée de poissons (10), adapté et configuré pour amener des poissons (13) à plusieurs dispositifs de traitement de poissons, comprenant
un transporteur transversal (14) adapté pour transporter les poissons (13) transversalement à leur orientation tête-queue dans la direction de transport transversal (15), le transporteur transversal (14) comprenant une pluralité d'éléments de réception (17) configurés respectivement pour la réception individuelle d'un des poissons (13) et le transporteur transversal (14) présentant une unité d'entraînement (19) adaptée de manière à pouvoir être commandée,
au moins un dispositif de chargement (11) adapté pour charger les éléments de réception (17) du transporteur transversal (14) avec les poissons,
plusieurs dispositifs de transfert (16) qui sont configurés pour transférer sélectivement les poissons (13) du transporteur transversal à des transporteurs longitudinaux (12) agencés respectivement en amont des dispositifs de traitement de poissons, les transporteurs longitudinaux (12) étant adaptés pour transporter les poissons (13) le long de leur orientation tête-queue vers les machines de traitement de poissons, ainsi
qu'un dispositif de commande qui est adapté pour commander l'au moins un dispositif de chargement (11), les dispositifs de transfert (16) ainsi que la vitesse de transport du transporteur transversal (14) sur la base d'au moins une prescription de répartition prédéterminée,
**caractérisé en ce que**
l'au moins un dispositif de chargement (11) comprend au moins un élément clapet à un temps (20) mobile de manière commandée, qui est adapté pour commander, au moyen d'un signal de commande à un temps généré par le dispositif de commande, respectivement le chargement d'un des éléments de réception (17) avec du poisson (13) à un instant de distribution présélectionné, le dispositif de chargement (11) comprenant un élément clapet d'accumulation (23) mobile de manière commandée, et l'élément clapet d'accumulation (23) étant agencé en amont de l'élément clapet à un temps (20) en formant une cascade de clapets (24).

2. Dispositif d'amenée de poissons selon la revendication 1, **caractérisé en ce que** le dispositif de chargement (11) comprend un plan de guidage (21) agencé de manière inclinée de telle sorte qu'en raison de l'effet de la force de gravité, dans une position de fermeture de l'élément clapet à un temps (20), les poissons (13) viennent se placer automatiquement devant celui-ci dans une première zone de retenue (22) et, dans une position d'ouverture de l'élément clapet à un temps (20), se déplacent automatiquement dans l'un respectif des éléments de réception (17) en direction du transporteur transversal (14).

3. Dispositif d'amenée de poissons selon la revendication 2, **caractérisé en ce que** le dispositif de commande est adapté pour commander la cascade de clapets (24) de telle sorte que, dans la mesure où l'élément clapet à un temps (20) est déplacé d'une position d'ouverture à une position de fermeture, l'élément clapet d'accumulation (23) est déplacé d'une position de fermeture à une position d'ouverture et inversement.

4. Dispositif d'amenée de poissons selon la revendication 3, **caractérisé en ce que** dans la zone de l'élément clapet d'accumulation (23) est agencé un moyen capteur (26) pour l'identification de poissons, qui est configuré et adapté pour détecter la présence d'un poisson (13) dans une zone d'attente (25) devant l'élément clapet d'accumulation (23) et pour le signaler au dispositif de commande.

5. Dispositif d'amenée de poissons selon l'une quelconque des revendications 1 à 4, **caractérisé en ce que** plusieurs des dispositifs de chargement (11) sont agencés dans la direction de transport transversal (15), respectivement décalés les uns à côté des autres d'au moins une largeur des éléments de réception (17).

6. Dispositif d'amenée de poissons selon l'une quelconque des revendications 1 à 5, **caractérisé en ce que** les éléments de réception (17) du transporteur transversal (14) forment un transporteur à circulation.

7. Dispositif d'amenée de poissons selon l'une quelconque des revendications 1 à 6, **caractérisé en ce que** chacun des éléments de réception (17) est adapté de manière à pouvoir pivoter respectivement autour d'un axe transversal (33).

8. Dispositif d'amenée de poissons selon la revendication 7, **caractérisé en ce que** les dispositifs de transfert (16) comprennent chacun un aiguillage de déchargement (28) qui est configuré et adapté pour faire pivoter l'un respectif des éléments de réception (17) d'une position de transport de poissons à une position de déchargement de poissons au moyen d'un signal de commande de transfert généré par le dispositif de commande.

9. Dispositif d'amenée de poissons selon la revendication 8, **caractérisé en ce que** l'aiguillage de déchargement (28) comprend un guide pivotant (29) adapté de manière à pouvoir être commandé au moyen du signal de commande de transfert.

10. Dispositif d'amenée de poissons selon l'une quelconque des revendications 7 à 9, **caractérisé en ce que** les dispositifs de transfert (16) comprennent respectivement, dans la zone de l'aiguillage de déchargement (28), des moyens de conduction (32) qui sont adaptés pour convoyer les poissons depuis les éléments de réception (17), dans la position de déchargement de poissons, vers chacun des transporteurs longitudinaux (12) sous l'effet de la force de gravité.

11. Dispositif d'amenée de poissons selon l'une quelconque des revendications 1 à 10, **caractérisé en ce que** les dispositifs de transfert (16) comprennent respectivement des capteurs d'occupation de poissons qui sont adaptés pour signaler au dispositif de commande si chacun des transporteurs longitudinaux (12) dans la zone du dispositif de transfert (16) est occupé par l'un des poissons (13) ou est libre.

12. Dispositif d'amenée de poissons selon l'une quelconque des revendications 1 à 11, **caractérisé en ce que** le dispositif de commande est configuré pour affecter les éléments de réception (17), lors du chargement de ceux-ci avec du poisson (13), respectivement à l'une des machines de traitement de poissons sur la base de la prescription de répartition prédéterminée et pour déterminer une prescription d'affectation.

13. Dispositif d'amenée de poissons selon la revendication 12, **caractérisé en ce que** le dispositif de commande est adapté pour déterminer les positions des éléments de réception (17) et pour déterminer les instants de distribution respectifs à l'aide de la prescription d'affectation et des positions déterminées des éléments de réception (17).

14. Dispositif d'amenée de poissons selon l'une quelconque des revendications 1 à 13, **caractérisé en ce que** le dispositif de commande est configuré pour déterminer respectivement les capacités d'acceptation des machines de traitement de poissons et/ou les états d'occupation des dispositifs de transfert (16) et pour déterminer à partir de ceux-ci respectivement une capacité d'acceptation réelle pour chacun des dispositifs de traitement de poissons.

15. Dispositif d'amenée de poissons selon la revendication 14, **caractérisé en ce que** le dispositif de commande comprend une unité de comparaison qui est ajustée pour comparer la capacité d'acceptation réelle de chacun des dispositifs de traitement de poissons respectivement avec une capacité d'acceptation de consigne prédéterminée affectée au dispositif de traitement de poissons respectif et, si au moins l'une des capacités d'acceptation réelles est inférieure à la capacité d'acceptation de consigne respectivement affectée, pour ajuster la prescription de répartition prédéterminée de telle sorte que la capacité d'acceptation de consigne respective soit réglée de manière réduite au moins temporairement.

16. Dispositif d'amenée de poissons selon la revendication 15, **caractérisé en ce que** l'unité de commande est en outre adaptée pour déterminer une capacité d'acceptation réelle totale en tant que somme des capacités d'acceptation réelles des machines de traitement de poissons et pour commander la vitesse de transport du transporteur transversal (14) de telle sorte que le chargement des éléments de réception (17) s'effectue sans interruption.

17. Procédé d'amenée de poissons à plusieurs machines de traitement de poissons, comprenant les étapes :
- le transport des poissons (13) transversalement à leur orientation tête-queue dans la direction de transport transversal (15) au moyen d'une pluralité d'éléments de réception (17) d'un transporteur transversal (14), configurés respectivement pour la réception individuelle d'un des poissons,
- le chargement des éléments de réception (17) du transporteur transversal (14) au moyen d'un dispositif de chargement (11),
- le transfert sélectif des poissons (13) du transporteur transversal (14) à des transporteurs longitudinaux (12) agencés respectivement en amont des machines de traitement de poissons, au moyen de dispositifs de transfert (16),
- le transport des poissons transférés (13) le long de leur orientation tête-queue vers les machines de traitement de poissons au moyen des transporteurs longitudinaux (12),
- la commande du chargement des éléments de réception (17) ainsi que du transfert sélectif des poissons (13) sur la base d'au moins une prescription de répartition prédéterminée,
**caractérisé**
**par** la génération d'un signal de commande à un temps au moyen du dispositif de commande et la commande d'au moins un élément clapet à un temps (20) mobile de manière commandée du dispositif de chargement (11) et le chargement des éléments de réception (17) avec du poisson à un instant de distribution présélectionné,
les poissons (13), lors du chargement des éléments de réception (17), traversant de manière cadencée et commandée une cascade de clapets (24) formée par l'élément clapet à un temps (20) et par un élément clapet d'accumulation (23) mobile de manière commandée, agencé en amont de celui-ci.

18. Procédé selon la revendication 17, **caractérisé en ce qu'**en raison de l'effet de la force de gravité, dans une position de fermeture de l'élément clapet à un temps (20), les poissons viennent se placer automatiquement devant celui-ci dans une première zone de retenue et, dans une position d'ouverture de l'élément clapet à un temps (20), se déplacent automatiquement dans l'un respectif des éléments de réception (17) en direction du transporteur transversal (14), par le fait que les poissons (13) glissent vers le bas sur un plan de guidage (21) agencé de manière inclinée.

19. Procédé selon la revendication 18, **caractérisé par** la commande de la cascade de clapets (24) au moyen du dispositif de commande de telle sorte que, dans la mesure où l'élément clapet à un temps (20) se trouve dans la position d'ouverture, l'élément clapet d'accumulation (23) est dans une position de fermeture, ou dans la mesure où l'élément clapet d'accumulation (23) se trouve dans une position d'ouverture, l'élément clapet à un temps (20) est dans la position de fermeture.

20. Procédé selon les revendications 17 à 19, **caractérisé par** la détection, au moyen d'un moyen capteur (26), de si une zone d'attente (25) devant l'élément clapet d'accumulation (23) est occupée par l'un des poissons (13) ou est libre, et par la signalisation de l'état détecté au dispositif de commande.

21. Procédé selon l'une quelconque des revendications 17 à 20, **caractérisé par** le chargement des éléments de réception (17) au moyen de plusieurs dispositifs de chargement (11) agencés dans la direction de transport transversal (15), respectivement décalés les uns à côté des autres d'au moins une largeur des éléments de réception (17).

22. Procédé selon l'une quelconque des revendications 17 à 21, **caractérisé par** la génération d'un signal de commande de transfert au moyen du dispositif de commande et la réalisation d'un mouvement de pivotement des éléments de réception (17) d'une position de transport de poissons à une position de déchargement de poissons au moyen d'un aiguillage de déchargement (28) respectif pour transférer l'un des poissons (13) d'un élément de réception (17) à chacun des transporteurs longitudinaux (12).

23. Procédé selon l'une quelconque des revendications 17 à 22, **caractérisé par** le passage des poissons (13) vers le transporteur longitudinal (12) respectif sous l'effet de la force de gravité respectivement dans la zone de l'aiguillage de déchargement au moyen de moyens de conduction (32).

24. Procédé selon l'une quelconque des revendications 17 à 23, **caractérisé par** la détection des états d'occupation des dispositifs de transfert (16) au moyen de capteurs d'occupation de poissons et la signalisation de si chacun des transporteurs longitudinaux (12) dans la zone du dispositif de transfert (16) est occupé par l'un des poissons (13) ou est libre par transmission des états d'occupation détectés au dispositif de commande.

25. Procédé selon l'une quelconque des revendications 17 à 24, **caractérisé par** l'entraînement du transporteur transversal (14) au moyen d'une unité d'entraînement commandable (19) et le réglage de la vitesse de transport au moyen du dispositif de commande.

26. Procédé selon l'une quelconque des revendications 17 à 25, **caractérisé par** l'affectation des éléments de réception (17), lors du chargement de ceux-ci avec du poisson (13), respectivement à l'une des machines de traitement de poissons sur la base de la prescription de répartition prédéterminée et l'établissement d'une prescription d'affectation.

27. Procédé selon la revendication 26, **caractérisé par** la détermination des positions des éléments de réception (17) et détermination des instants de distribution respectifs à l'aide de la prescription d'affectation et des positions déterminées des éléments de réception (17).

28. Procédé selon l'une quelconque des revendications 17 à 27, **caractérisé par** la surveillance des capacités d'acceptation des machines de traitement de poissons et/ou des états d'occupation des dispositifs de transfert (16) et la détermination à partir de ceux-ci des capacités d'acceptation réelles pour chacun des dispositifs de traitement de poissons.

29. Procédé selon la revendication 28, **caractérisé par** la comparaison de la capacité d'acceptation réelle de chacun des dispositifs de traitement de poissons respectivement avec une capacité d'acceptation de consigne prédéterminée affectée au dispositif de traitement de poissons respectif et, si au moins l'une des capacités d'acceptation réelles est inférieure à la capacité d'acceptation de consigne respectivement affectée, l'ajustement de la prescription de répartition prédéterminée de telle sorte que la capacité d'acceptation de consigne respective soit réduite au moins temporairement.

30. Procédé selon l'une quelconque des revendications 28 ou 29, **caractérisé par** la détermination d'une capacité d'acceptation réelle totale en tant que somme des capacités d'acceptation réelles des machines de traitement de poissons et la commande de la vitesse de transport du transporteur transversal (14) de telle sorte que le chargement des éléments de réception (17) s'effectue sans interruption.
